# EUROPEAN PATENT SPECIFICATION

(11) **EP 3 372 366 B1**
(45) Date of publication and mention of the grant of the patent: **22.01.2020**
(21) Application number: 18160003.2
(22) Date of filing: 05.03.2018
(51) Int. Cl.: B29C 70/66

(54) **HOT-MOLDING METHOD**
HEISSFORM METHODE
PROCÉDÉ DE MOULAGE À CHAUD

(30) Priority: 06.03.2017 IT 201700024675
(43) Date of publication of application: 12.09.2018
(73) Proprietor: Tryonic Ltd, London (GB)
(72) Inventor: Paronetto, Giuseppe, London, Greater London (GB); Del Guasta, Andrea, London, Greater London (GB)
(74) Representative: Citron, Massimiliano

(56) References cited:
- EP-A1- 2 111 970
- WO-A1-92/22424
- WO-A2-2011/130188
- JP-A- H07 100 847
- US-A- 3 608 010
- US-A- 4 788 230
- US-A- 5 242 637
- US-A1- 2004 059 010
- US-A1- 2007 202 326
- US-B2- 7 368 167

## Description

The invention relates to a method for hot-molding. In particular, the method is convenient for molding paddings, e.g. of helmets, or generally cushions to absorb shocks.

A composite material is known, e.g. from W02012140473 or EP0585965, that, thanks to the fact that it contains synthetic hollow microspheres, can advantageously be used for many uses. EP0585965 exploits it to lighten the final product, while WO2012140473 uses the expanding characteristics thereof during molding for better copying the cavity of the mold.

However, the material is not without drawbacks and has the problem of being highly volatile. The qualities described in EP 2697028 remain, yet the material is in fact a very fine powder, difficult to handle and convey. It is not always possible or economically feasible to put particular measures into practice to ensure that the powder material is not inhaled and has a homogeneous distribution inside the mold.

In sum, the art lacks a method to manage the material of the above-mentioned type in an efficient manner.

EP 2 111 970 refers to the fabrication of printed structures, more particularly to ice hockey sticks or blades molded from a core that includes expandable thermoplastic microspheres.

US 4 788 230 refers to a method of mixing low density synthetic foam.

US 7 368 167 refers to low density expanded thermoplastic microspheres with thermal coating.

The main object of the invention is to propose a different method for molding with the aforementioned material. The method according to claim 1 is for hot-molding a powder material comprising - or consisting - by weight - of 20-50% of expanded particles and 80-50% of unexpanded particles, the particles being made of plastic material, of closed shape, hollow and filled with gas,
and comprises the steps of
spraying the material with a, preferably atomized, liquid while it is kept stirred to thicken the material,
applying a layer of fiber-reinforced material on a mold cavity,
putting the thickened material on the fiber-reinforced material,
closing the mold cavity and heating the two materials inside the cavity.

The spraying step preferably takes place before and/or during the transport of the material inside the mold. The spraying step can also occur during the application or the stay of the material inside the mold.

The spraying of the liquid preferably takes place in variable quantity between 50 and 500% by weight with respect to the material, a value which has given good experimental results.

Spraying the liquid has the effect of aggregating the particles of the powder material preventing them from floating in the environment. The wet material forms a dry mush that is easily spreadable inside a mold, in particular on a layer reinforced with fibers to which the shape of the mold cavity is to be transferred. Another advantage is that the so-treated material is easier to apply also to complicated mold or piece geometries, thereby allowing the material to remain in the desired position.

Advantageous examples of a layer reinforced with fibers exploited in the method are layers reinforced with (or comprising) carbon or glass or aramid fibers.

The method allows canceling or limiting the volatility of the powder material, in particular before and/or during transport inside the mold. No more agitators or vibrators to even out the density inside the mold are needed.

The sprayed liquid can be water, or in general a liquid that
has evaporation temperature between 150 and 200 °C, and
is chemically inert with respect to the fiber-reinforced layer and to the powder material.

As sprayers one can use e.g. known nebulizers or atomizers.

For the fiber-reinforced layer, water vapor can sometimes create problems of undesired pressure inside the mold. Therefore as sprayed liquid it is preferable to avoid water and use e.g. an oil, a phthalate, a glycol or a high-boiling hydrocarbon.

When using carbon fiber as/in the layer reinforced with fibers, it is preferable as sprayed liquid to use plasticizer, which does not react with the carbon or with the resin that impregnates the fibers.

An example of a process is the following. Finished the baking in the mold, (e.g. for 3 hours at 140 - 160 °C), the object is extracted. The internal core made of powder material, however, has not solidified. The powder material during baking has only expanded pressing the layer reinforced with fibers against the walls of the mold, always remaining a friable mass. It is then possible to break it up to remove the internal core of the object, being sufficient for example a jet of compressed air or a washing liquid (even water). It follows that the method facilitates the production of hollow objects, e.g. with an outer rigid molded carbon shell.

In a variant, to the plasticizer a substance or a vulcanizing elastomer is added that reacts with the plasticizing agent, so that the core becomes solid at the end of the firing. Though it is not easy or possible to break it up, the method always maintains the advantage of processing non-volatile powder material.

The powder material to be molded is preferably composed by weight of 20-50% of expanded particles and 80-50% of unexpanded particles, the particles being made of plastic material, of closed shape, hollow and filled with (inflammable) gas. These values guarantee advantageous performance and weight suitable for applications, in particular excellent results of impact absorption and lightness. The expanded particles are essential for the invention, and act as a binder or filler for the other unexpanded particles.

In fact the expanded particles are the filling element (filler) and act as a binder preventing that the other expandable particles (not expanded yet), which are heavier, precipitate by gravity on the bottom of the mold and thicken. Instead this way the expanded particles keep the expanding particles suspended throughout the material and evenly. That's why the presence of expanded and unexpanded particles guarantees the homogeneity of the density of the whole piece thereby ensuring uniformity for the mechanical performance.

The particles generally have a spherical shape and are very small (10-40 pm in diameter). However, note that size is not essential.

As particles, plastic gas-filled microspheres can be used.

An advantage of the material is that it gives the molded product a shape memory. When the product undergoes a deformation, the expanded and unexpanded spheres are compressed or dilated in its own mass. Thanks to the elasticity of the spheres, when the stress ceases each sphere returns to its original state, and consequently the material reacquires the starting form. Also note that the molded product reacts to a second deformation in the same way as to the first one, with obvious advantages of security and repeatability of the response to a shock. Another advantage of the material is to have a smaller density than that of EPS. It is then possible to make lighter objects with volume being equal, or to increase the cushioning capacity for the same volume.

The material is used as an expanding core in the molding of a fiber-reinforced material. The core expands inside the mold and pushes the composite, that is the fiber-reinforced material, towards the walls of the mold, thereby indeed compensating for withdrawals and allowing an optimum copying of the mold.

## Claims

1. Method of hot-molding a powder material comprising 20-50% by weight of expanded particles and 80-50% of unexpanded particles, the particles being made of plastic material, of closed shape, hollow and filled with gas,
with the steps of
spraying the material with a liquid while the material is kept under stirring to thicken the material, in order to aggregate the particles of the powder material preventing them from floating in the environment, and making the wet material a dry mush,
applying on a mold cavity a layer of a fiber-reinforced material,
putting the thickened material on the fiber-reinforced material,
closing the mold cavity and heating the two materials inside the cavity.

2. Method according to claim 1, wherein the amount of sprayed liquid with respect to the material is by weight 50-500%.

3. Method according to claim 1 or 2, wherein the step of spraying takes place before and/or during transport of the material inside the mold.

4. Method according to claim 1 or 2, wherein the step of spraying takes place during the application or the stay of the material inside the mold.

5. Method according to any one of the preceding claims, wherein the fiber-reinforced layer is a layer of carbon fibers or glass fibers or aramid fibers.

6. Method according to any one of the preceding claims, wherein the sprayed liquid is water, or a liquid that has evaporation temperature comprised between 150 and 200 °C, and is chemically inert with respect to the fiber-reinforced layer and the powder material.

7. Method according to any one of claim 1 to 5, wherein the sprayed liquid is an oil, or a phthalate, or a glycol or a high-boiling hydrocarbon.

8. Method according to any preceding claim, wherein carbon fiber is used as fiber-reinforced layer, and plasticizer is used as sprayed liquid.

9. Method according to claim 8, wherein a vulcanizing substance or elastomer is added to the plasticizer, the substance or elastomer by heat reacting with the plasticizer.

10. Method according to any one of the preceding claims, wherein the powder material to be molded is composed by weight of 20-50% of expanded particles and 80-50% of unexpanded particles, the particles being made of plastic material, of closed shape, hollow and filled with inflammable gas.

11. Method according to any one of the preceding claims, wherein the particles generally have a spherical shape and are 10-40 pm in diameter.

12. Method according to any one of the preceding claims, wherein the liquid is atomized.

## Patentansprüche

1. Verfahren zum Warmpressen von einem Pulvermaterial, umfassend 20 bis 50 Gew-% geschäumte Partikel und 80 bis 50 Gew-% ungeschäumte Partikel, wobei die Partikel aus Kunststoff, in geschlossener Form, hohl und gasgefüllt sind,
mit den Schritten
Besprühen des Materials mit einer Flüssigkeit, während das Material zur Materialverdickung ständig geschüttelt wird, um die Partikel des Pulvermaterials zu aggregieren und zu verhindern, dass sie in der Umgebung schweben, wobei das benetzte Material eine trockene Brei wird;
Auftragung einer Schicht aus faserverstärktem Material auf einen Formhohlraum,
Auflegen des verdickten Materials auf das faserverstärkte Material, Schließen des Formhohlraums und Erwärmung der beiden Materialien im Inneren des Hohlraums.

2. Verfahren nach Anspruch 1, wobei die Menge der gespritzten Flüssigkeit in Bezug auf das Material 50 bis 500 Gew-% beträgt.

3. Verfahren nach Anspruch 1 oder 2, wobei die Sprühphase vor und/oder während des Transports des Materials in die Form erfolgt.

4. Verfahren nach Anspruch 1 oder 2, wobei die Sprühphase während des Auftragen oder der Verweilzeit des Materials innerhalb der Form erfolgt.

5. Verfahren nach einem der vorhergehenden Ansprüche, wobei es sich bei der faserverstärkten Schicht um eine kohlenstoff-, glas- oder aramidfaserverstärkte Schicht handelt.

6. Verfahren nach einem der vorhergehenden Ansprüche, wobei es sich bei der gespritzten Flüssigkeit um Wasser oder eine Flüssigkeit handelt, die eine Verdampfungstemperatur zwischen 150 und 200 °C aufweist und gegenüber der faserverstärkten Schicht und dem Pulvermaterial chemisch inert ist.

7. Verfahren nach einem der Ansprüche 1 bis 5, wobei es sich bei der gespritzten Flüssigkeit um ein Öl, ein Phthalat, ein Glykol oder einen hochsiedenden Kohlenwasserstoff handelt.

8. Verfahren nach einem der vorhergehenden Ansprüche, wobei Kohlenstofffaser als faserverstärkte Schicht und Weichmacher als gespritzte Flüssigkeit verwendet werden.

9. Verfahren nach Anspruch 8, wobei dem Weichmacher ein vulkanisierender Stoff oder ein Elastomer zugesetzt wird, das mit der Wärme mit dem Weichmacher reagiert.

10. Verfahren nach einem der vorhergehenden Ansprüche, wobei das zu pressenden Material aus 20% bis 50 Gew-% geschäumten Partikeln und 80 bis 50 Gew-% ungeschäumten Partikeln besteht, wobei die Partikel aus Kunststoff, in geschlossener Form, hohl und gasgefüllt sind,

11. Verfahren nach einem der vorhergehenden Ansprüche, wobei die Partikel kugelförmig sind und einen Durchmesser von 10-40 µm aufweisen.

12. Verfahren nach einem der vorhergehenden Ansprüche, wobei die Flüssigkeit zerstäubt wird.

## Revendications

1. Méthode de moulage à chaud d'un matériau en poudre comprenant de 20 à 50% en poids de particules expansées et de 80 à 50% de particules non expansées, les particules étant en matériau plastique, de forme fermée, creuse et remplie de gaz,
avec les étapes de
pulvérisation du matériau avec un liquide tout en maintenant l'agitation du matériau pour épaissir le matériau, afin d'agréger les particules du matériau en poudre les empêchant de flotter dans l'environnement, et en transformant le matériau humide en bouillie sèche,
application d'une couche d'un matériau renforcé par des fibres sur une cavité de moule
mise du matériau épaissi sur le matériau renforcé par des fibres,
fermeture de la cavité de moule et chauffage des deux matériaux à l'intérieur de la cavité.

2. Méthode selon la revendication 1, où la quantité de liquide pulvérisée par rapport au matériau est comprise entre 50 et 500% en poids.

3. Méthode selon la revendication 1 ou 2, où l'étape de pulvérisation a lieu avant et/ou pendant le transport du matériau à l'intérieur du moule.

4. Méthode selon la revendication 1 ou 2, où l'étape de pulvérisation a lieu pendant l'application ou la permanence du matériau à l'intérieur du moule.

5. Méthode selon l'une quelconque des revendications précédentes, où la couche renforcée par des fibres est une couche de fibres en carbone ou en verre ou d'aramide.

6. Méthode selon l'une quelconque des revendications précédentes, où le liquide pulvérisé est de l'eau ou un liquide ayant une température d'évaporation comprise entre 150 et 200°C et est chimiquement inerte par rapport à la couche renforcée par des fibres et au matériau en poudre.

7. Méthode selon l'une quelconque des revendications de 1 à 5, où le liquide pulvérisé est une huile, ou un phtalate, ou un glycol ou un hydrocarbure à haut point d'ébullition.

8. Méthode selon l'une quelconque des revendications précédentes, où la fibre de carbone est utilisée en tant que couche renforcée par des fibres et est utilisée en tant que liquide pulvérisé du plastifiant.

9. Méthode selon la revendication 8, où une substance ou élastomère de vulcanisation qui réagit avec la chaleur avec le plastifiant est ajouté au plastifiant.

10. Méthode selon l'une quelconque des revendications précédentes, où le matériau en poudre à mouler est composé de 20 à 50% en poids de particules expansées et de 80 à 50% de particules non expansées, les particules étant en matériau plastique, de forme fermée, creuse et remplie de gaz inflammable.

11. Méthode selon l'une quelconque des revendications précédentes, où les particules ont une forme sphérique et ont un diamètre de 10 à 40 µm.

12. Méthode selon l'une quelconque des revendications précédentes, où le liquide est atomisé.
